# EUROPÄISCHE PATENTSCHRIFT

(11) **EP 3 261 800 B1**
(45) Veröffentlichungstag und Bekanntmachung des Hinweises auf die Patenterteilung: **12.12.2018**
(21) Anmeldenummer: 16707684.3
(22) Anmeldetag: 24.02.2016
(51) Int. Cl.: B23P 9/04, B21H 7/18, C21D 7/02, C21D 7/08, B24B 39/00, C21D 9/30, C21D 7/04

(54) **FESTHAMMERVORRICHTUNG ZUM BEEINFLUSSEN VON WERKSTÜCKEN UND ZUGEHÖRIGES VERFAHREN**
HAMMERING DEVICE FOR INFLUENCING WORKPIECES AND ASSOCIATED METHOD
SYSTÈME DE MARTEAU FIXE SERVANT À AGIR SUR DES PIÈCES ET PROCÉDÉ ASSOCIÉ

(30) Priorität: 26.02.2015 DE 102015203487
(43) Veröffentlichungstag der Anmeldung: 03.01.2018
(73) Patentinhaber: Ecoroll AG, Werkzeugtechnik, 29227 Celle (DE)
(72) Erfinder: OSTERTAG, Alfred, 29229 Celle (DE); ZENK, Stefan, 29308 Winsen (DE)
(74) Vertreter: Lins, Martina
(86) Internationale Anmeldenummer: PCT/EP2016/053815
(87) Internationale Veröffentlichungsnummer: WO 2016/135169

(56) Entgegenhaltungen:
- WO-A1-2005/092575
- AT-B- 364 592
- DE-A1-102006 058 710
- DE-A1-102013 002 495
- DE-C- 362 326
- DE-C- 967 868

## Beschreibung

Die Erfindung betrifft eine Festhammervorrichtung zum Beeinflussen, insbesondere einer Randzone, von Werkstücken, mit (a) einem Schlagwerkzeug zum Einwirken auf das Werkstück, (b) einem Schlagwerk, das einen Schläger zum Erzeugen eines Schlagimpulses auf das Schlagwerkzeug aufweist, und (c) einem Antrieb zum Antreiben des Schlagwerks, wobei das Schlagwerk zumindest einen zweiten Schläger zum Erzeugen eines Schlagimpulses auf das Schlagwerkzeug aufweist. Gemäß einem zweiten Aspekt betrifft die Erfindung ein Verfahren, bei dem ein derartiges Werkzeug eingesetzt wird.
Festhammervorrichtungen werden verwendet, um auf die Oberfläche von Werkstücken einzuschlagen, sodass sich deren Randzone verändert. Es bilden sich oberflächennahe Druckeigenspannungen und gegebenenfalls Gefügeveränderungen, die das Verschleißverhalten des Werkstücks positiv beeinflussen.
Aus der DE 10 2006 058 710 A1 ist eine Bearbeitungsvorrichtung zum Verfestigen von Radienübergängen bekannt, bei der zwei Aktoren auf jeweilige zugeordnete Hebel einwirken und so auf eine Pinole schlagen.
Die AT 364 592 beschreibt ein Hammerwerkzeug, bei dem ein axial beweglicher Schlägel auf mehrere Gelenkplatten schlägt, die die Schlagenergie in eine radiale Richtung umlenken.
Die DE 10 2013 002 495 A1 beschreibt eine Kaltschmiedevorrichtung, bei der mehrere Klopfelemente radial auswärts bewegbar gelagert und einzeln mit Druckluft beaufschlagbar sind.
Nachteilig an den bekannten Festhammervorrichtungen ist deren geringe Produktivität. Das hat dazu geführt, dass in der Regel Kugelstrahlen oder Festwalzen als Verfahren vorgezogen werden.
Der Erfindung liegt die Aufgabe zu Grunde, die Produktivität beim Festhämmern zu verbessern.

Die Erfindung löst das Problem durch eine Festhammervorrichtung, die die Merkmale des Anspruchs 1 aufweist.

Vorteilhafte Ausgestaltungen der Festhammervorrichtung sind in den Unteransprüchen 2 bis 9 angegeben. Vorteilhaft an einer derartigen Festhammervorrichtung ist, dass eine deutlich höhere Schlagfrequenz auf das Schlagwerkzeug erreichbar ist. Damit ist die Produktivität der Festhammervorrichtung steigerbar. Besonders vorteilhaft ist es, wenn - wie efindungsgemäß vorgesehen - alle Schläger von dem gleichen Antrieb angetrieben sind. Es ergibt sich eine konstruktiv einfache und zudem robuste Festhammervorrichtung, die eine hohe Produktivität erlaubt.
Im Rahmen der vorliegenden Beschreibung wird unter dem Schlagwerkzeug dasjenige Bauteil der Festhammervorrichtung verstanden, das beim Einsatz in unmittelbaren Kontakt mit dem Werkstück kommt.
Unter dem Schlagwerk wird insbesondere eine Vorrichtung verstanden, die eine Bewegung, insbesondere eine Drehbewegung, des Antriebs in eine Bewegung der Schläger umsetzt. Der Antrieb ist insbesondere ein Drehantrieb, insbesondere ein Elektromotor, Hydraulikmotor oder Pneumatikmotor.
Unter der Schlagintensität wird ein Maß dafür verstanden, wie heftig das Schlagwerkzeug auf das Werkstück einzuwirken vermag. Eine hohe Schlagintensität führt zu einer stärkeren Verformung der Werkstückrandzone als eine geringe Schlagintensität. Die Schlagintensität kann beispielsweise durch die Schlagenergie beschrieben werden. Die Schlagenergie ist die dem Schlagwerkzeug während seiner auf die Werkstückoberfläche gerichtete Vorwärtsbewegung innewohnende, vom Schlagbolzen übernommene kinetische Energie.
Günstig ist es, wenn das Schlagwerk ein pneumatisches Schlagwerk ist. In diesem Fall umfasst der Schläger einen Schlagbolzen, der in einer Hülse läuft und gegen diese abgedichtet ist. Die Antriebsleistung des Antriebs bewegt die Hülse und diese überträgt die Bewegungsenergie wie aus elektro-pneumatischen Schlagwerken bekannt auf den Schlagbolzen. Es ist alternativ möglich, dass der Schlagbolzen mittels einer Feder an einem Haltelement befestigt ist, das im Betrieb zyklisch hin- und her bewegt wird.

Erfindungsgemäß weist das Schlagwerk eine Antriebswelle, die sich entlang einer Antriebsachse erstreckt, und einen Taumelring zum Umsetzen einer Drehbewegung der Antriebswelle in einer Translationsbewegung auf. Der erste Schläger und der zweite Schläger sind von dem Taumelring angetrieben. Vorzugsweise umfasst der Taumelring einen rotierbaren Kranz, der mit dem Antrieb drehfest verbunden ist, und einen drehfesten Kranz, der sich nicht dreht, wenn der rotierbare Kranz sich dreht. Der Taumelring wird so durch die kontinuierliche Drehbewegung des Antriebs in eine alternierende Hubbewegung umgesetzt. Die Umsetzung der Drehbewegung in eine translatorische Bewegung kann auch mittels einer Kurbelwelle oder einer Nockenwelle erfolgen.

Besonders bevorzugt ist es, wenn der erste Schläger unter einem ersten spitzen Schlagwinkel relativ zur Antriebsachse bewegbar gelagert ist und der zweite Schläger unter einem zweiten spitzen Schlagwinkel relativ zur Antriebsachse bewegbar gelagert ist.

Vorzugsweise entspricht der erste Winkel dem zweiten Winkel. Hierunter ist zu verstehen, dass der erste Winkel im technischen Sinne gleich dem zweiten Winkel ist, dass es also möglich, nicht aber notwendig ist, dass die beiden Winkel im mathematischen Sinne gleich sind. Insbesondere sind Abweichungen, beispielsweise von ±3°, tolerierbar. Auf diese Weise entspricht der Schlagimpuls des ersten Schlägers in guter Näherung dem des zweiten Schlägers, was zu besonders gleichmäßigen Beeinflussungen der Randzonen führt.

Vorzugsweise umfasst das Schlagwerk zumindest einen dritten Schläger zum Erzeugen eines Schlagimpulses auf das Schlagwerkzeug, wobei der dritte Schläger unter einem dritten spitzen Schlagwinkel relativ zur Antriebsachse bewegbar gelagert ist, wobei der dritte Winkel dem ersten Winkel und dem zweiten Winkel entspricht, wobei der dritte Schläger von dem Taumelring angetrieben ist und wobei zumindest alle Schläger in äquidistanten Winkelschritten angeordnet sind. Besonders günstig ist es, wenn sich diese äquidistanten Winkelschritte auf eine Ebene beziehen, die senkrecht zur Antriebsachse verläuft. Eine derartige Festhammervorrichtung gibt in zeitlich äquidistanten Abständen Impulse von im wesentlich gleichbleibender Schlagintensität ab.

Gemäß einer bevorzugten Ausführungsform ist der Taumelring unter einem Taumelwinkel relativ zu der Antriebswelle ausgerichtet und das Schlagwerkzeug weist eine Taumelwinkel-Verstellvorrichtung zum Einstellen des Taumelwinkels auf. Durch Veränderung des Taumelwinkels lässt sich der Hub der Schläger, insbesondere der Hülsen, verändern. Je größer der Hub, desto größer ist bei gleicher Drehzahl der Antriebswelle die Schlagenergie. Es lässt sich daher die Schlagintensität ändern, ohne dass die Schlagfrequenz geändert werden muss. Das führt zu einer gleichbleibend hohen Produktivität der Festhammervorrichtung unabhängig von der Schlagintensität.

Günstig ist es, wenn die Festhammervorrichtung zumindest einen Sensor zum Messen einer Schlagintensität von Schlägen der Schläger und eine Steuerung aufweist, der mit dem Sensor und der Taumelwinkel-Verstellvorrichtung zum Einstellen des Taumelwinkels verbunden und zum Steuern und/oder Regeln der Schlagenergie eingerichtet ist, um bauteilbezogene, ortsabhängige, gesteuerte und veränderliche Schlagimpulse zur Modellierung variierender Oberflächenzustände zu erzielen.

Bei dem Sensor kann es sich beispielsweise um einen akustischen Sensor handeln, der die Schallemission aufzeichnet, die von einem Schlag des Schlägers ausgeht. Da die imitierte Schallintensität von der Schlagintensität abhängt, kann so die Schlagintensität bestimmt werden.

Alternativ oder zusätzlich kann es sich bei dem Sensor um einen Geschwindigkeitssensor handeln, der in einem definierten Abstand zum Aufschlagpunkt der Festhammerspitze die Geschwindigkeit des Schlägers ermittelt. Aus der Masse des Schlägers wird dann, beispielsweise von der Steuerung, der Schlagimpuls bestimmt, der als Kenn- und Regelgröße dienen kann. Im Weiteren kann das Signal zur Bestimmung des Energieimpulses als Aussage über den tatsächlich ausgeführten Festhammerschlag herangezogen werden, um die Prozesssicherheit zu erhöhen.

Gemäß einer bevorzugten Ausführungsform umfasst das Schlagwerk einen Döpper, der mittels Verriegelung axial begrenzt beweglich gehalten wird. Nach manueller Entriegelung lässt sich das Schlagwerkzeug schnell gegen ein weiteres Schlagwerkzeug austauschen. Die bevorzugte Lösung besteht aus einem Beschleunigungssensor und einer Datenübertragung per Funk und einem Rechenmodul, das Teil der Steuerung sein kann und die Schlagenergie aus Beschleunigung, Verzögerung und Zeit berechnet.

Vorzugsweise umfasst das Schlagwerkzeug ein erstes Schlagelement und zumindest ein zweites Schlagelement und für jedes Schlagelement einen Käfig, in dem das jeweilige Schlagelement gefangen ist, und ein fließfähiges, inkompressibles Schlagimpuls-Übertragungsmittel, das angeordnet ist zum Übertragen des Schlagimpulses vom Döpper auf die Schlagelemente.

Unter dem Merkmal, dass das Schlagimpuls-Übertragungsmittel fließfähig ist, wird insbesondere verstanden, dass es eine Hin- und Rückbewegung der Schlagelemente erlaubt. Bei den Schlagelementen kann es sich beispielsweise um Kugeln handeln und die Kugeln sind in einem Käfig gefangen, der einen Kugelsitz aufweist, sodass die Kugeln den Käfig nicht verlassen und damit in diesem gefangen sind. Die Kugeln ragen über den Sitz hinaus, sodass sie beim Betrieb der Festhammervorrichtung mit der Oberfläche des Werkstücks in Kontakt kommen können.

Das Schlagimpuls-Übertragungsmittel, bei dem es sich beispielsweise um Wasser, Öl, eine Suspension oder eine Paste handeln kann, leitet den Schlagimpuls vom Döpper auf die Schlagelemente weiter. Alternativ oder zusätzlich kann das Schlagimpuls-Übertragungsmittel relativ zueinander bewegliche, zum Beispiel kugelförmige, Festkörper umfassen, die den Schlagimpuls auf die Oberfläche des Werkstücks übertragen.

Dadurch, dass die Schlagelemente in ihrem Käfig in einer Richtung beweglich gefangen sind, können sie der Kontur des Werkstücks, zumindest in einem gewissen Umfang, folgen. Das stellt sicher, dass die Einwirkung auf die Werkstückoberfläche unabhängig von deren Topographie ist.

Vorzugsweise ist das erste Schlagelement zum Ausführen einer Wirkbewegung und einer ersten Wirkbewegungsrichtung angeordnet und das zweite Schlagelement ist zum Ausführen einer Wirkbewegung in eine zweite Wirkbewegungsrichtung angeordnet, die von der ersten Wirkbewegungsrichtung verschieden ist.

Alternativ ist es möglich, dass die Wirkbewegungsrichtungen die gleichen sind. So ist gemäß einer bevorzugten Ausführungsform vorgesehen, dass die Schlagelemente so angeordnet sind, dass zumindest eine Mehrheit von ihnen eine Ebene kontaktieren kann. Diese Ebene ist beim Betrieb der Festhammervorrichtung die Oberfläche des Werkstücks. Alternativ oder zusätzlich sind die Schlagelemente in den Käfigen so ausgerichtet, dass die Schlagelemente gleichzeitig eine Zylinderinnenfläche kontaktieren können. In diesem Fall kann eine Rohrinnenoberfläche festgehämmert werden.

Besonders vorteilhaft ist es in dem Fall, wenn die Festhammervorrichtung um ihre Längsachse, die im Einsatz einer Rohr-Längsachse entsprechen kann, drehbar ausgebildet ist. In diesem Fall sind die Schlagelemente vorzugsweise so angeordnet, dass sie bezüglich einer Achse, insbesondere der Antriebsachse, nach radial auswärts wirken.

Günstig ist es, wenn die Schlagelemente so angeordnet sind, dass sie an einer Zylinderinnenwand eines Rohres anliegen und die Oberfläche der Zylinderinnenwand festhämmern können. Der Durchmesser der Zylinderinnenwand beträgt vorzugsweise zumindest 20 mm.

Sind drei oder mehr Schläger vorhanden, so sind diese vorzugsweise drehsymmetrisch bezüglich einer Drehsymmetrieachse angeordnet, bei der es sich vorzugsweise um die Antriebsachse handelt.

Vorzugsweise umfasst das Schlagwerkzeug zumindest einen schwenkbaren Stößel. Günstig ist es, wenn der schwenkbare Stößel so ausgebildet ist, dass er relativ zu dieser Drehsymmetrieachse schwenkbar ist. Insbesondere sind zwei schwenkbare Stößel so ausgebildet, dass zwei Hohlkehlen an Hub- und/oder Hauptlagerzapfen einer Kurbelwelle für Verbrennungsmotoren durch Festhämmern bearbeitbar sind. Die Festhammervorrichtung könnte dann auch als Kurbelwellen-Festhammervorrichtung bezeichnet werden.

Gemäß einer bevorzugten Ausführungsform besitzt die Festhammervorrichtung einen ersten Schlaghammer, der schwenkbar gelagert ist, sodass der erste Schlaghammer beim Betrieb der Festhammervorrichtung eine Wirkbewegung in erste Bewegungsrichtung ausführt, und einen zweiten Schlaghammer, der schwenkbar gelagert ist, sodass der zweite Schlaghammer beim Betrieb der Festhammervorrichtung eine zweite Wirkbewegungsrichtung ausführt, die sich von der ersten Wirkbewegungsrichtung unterscheidet. Gemäß einer bevorzugten Ausführungsform umfasst die Festhammervorrichtung eine Vielzahl an Schlaghämmern, deren Wirkbewegungsrichtungen bezüglich einer Achse, insbesondere der Drehsymmetrieachse oder der Antriebsachse, nach radial auswärts verlaufen.

Es ist möglich und gemäß einer bevorzugten Ausführungsform vorgesehen, dass jedem Schlaghammer genau ein Schläger zugeordnet ist.

Im Folgenden wird die Erfindung anhand der beigefügten Zeichnungen näher erläutert. Dabei zeigt
- Figur 1: einen Längsschnitt durch eine erfindungsgemäße Festhammervorrichtung gemäß einer ersten Ausführungsform,
- Figur 1a: einen Teilquerschnitt entlang der Linie B-B nach Figur 1, der eine mögliche Aufteilung des Schlagwerks in Einzelwerkzeuge zeigt,
- Figur 2: einen Querschnitt entlang der Linie A-A von Figur 1,
- Figur 3: die Schlagenergie in Abhängigkeit von einer Drehfrequenz des Antriebs,
- Figur 4: einen Querschnitt durch eine erfindungsgemäße Festhammervorrichtung gemäß einer zweiten Ausführungsform,
- Figur 5a: einen Querschnitt durch eine dritte Ausführungsform einer erfindungsgemäßen Festhammervorrichtung und
- Figur 5b: ein Querschnitt bezüglich der Schnittlinie C-C.
- Figur 6: zeigt einen Querschnitt durch einen Teil eines Schlagwerks einer erfindungsgemäßen Festhammervorrichtung
- Figur 7: einen schematischen Querschnitt durch ein weiteres Schlagwerkzeug,
- Figur 8: einen Teil einer erfindungsgemäßen Festhammervorrichtung und
- Figur 9: eine Schaltskizze einer Steuerung einer erfindungsgemäßen Festhammervorrichtung.
- Figur 10: zeigt eine erfindungsgemäße Festhammermaschine mit einer erfindungsgemäßen Festhammervorrichtung.

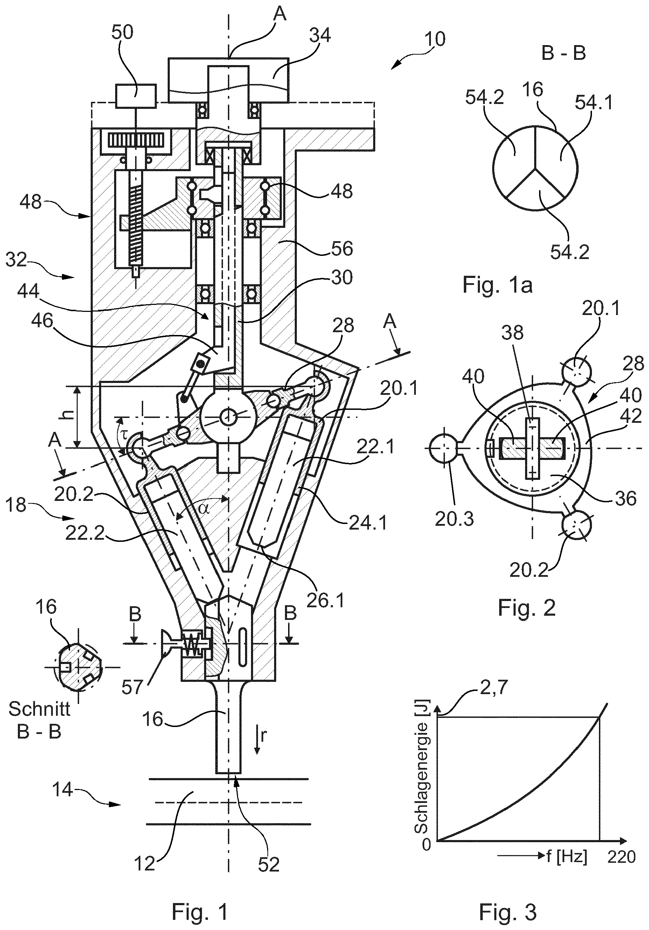

Figur 1 zeigt einen Längsschnitt durch eine erfindungsgemäße Festhammervorrichtung 10 zur Beeinflussung einer Randzone 12 eines Werkstücks 14. Die Festhammervorrichtung 10 besitzt ein Schlagwerkzeug 16 in Form eines Meißels aus Hartmetall oder gehärtetem Stahl.

Die Festhammervorrichtung 10 besitzt ein Schlagwerk 18, das ein ersten Schläger 20.1, einen zweiten Schläger 20.2 und einen in Figur 1 nicht zu sehenden dritten Schläger 20.3 (vgl. Figur 2) umfasst. Es hat sich herausgestellt, dass drei Schläger eine geeignete Anzahl sind, es ist aber auch möglich, dass das Schlagwerk vier, fünf oder mehr Schläger umfasst.

Die Schläger 20 umfassen jeweils einen Schlagbolzen 22. So besitzt der Schläger 20.1 einen Schlagbolzen 22.1. Der Schlagbolzen 22.1 ist in einer Hülse 24.1 aufgenommen und gegen diese abgedichtet. Der Schlagbolzen 22 (Bezugszeichen ohne Zählsuffix beziehen sich auf alle entsprechenden Objekte) hat ein Schlagende 26, mit dem er auf das Schlagwerkzeug 16 oder einen in Figur 1 nicht gezeigten Döpper schlägt.

Der Schläger 20 ist mit seinem dem Schlagende 26 gegenüber liegenden Ende an einem Taumelring 28 befestigt, der von einer Antriebswelle 30 angetrieben wird, die wie er um eine Antriebsachse A drehbar gelagert ist. Die Antriebswelle 30 ist Teil eines Antriebs 32, der zudem einen schematisch eingezeichneten Motor 34, insbesondere einen Elektromotor, aufweist.

In einer anderen Ausführungsform kann die Welle 30 auch durch die Arbeitsspindel einer Werkzeugmaschine angetrieben sein. Eine Werkzeugmaschine mit einer Arbeitsspindel, die eine erfindungsgemäße Festhammervorrichtung aufweist und zum Antreiben mit dieser verbunden ist, ist ebenfalls Gegenstand der Erfindung.

Figur 1 zeigt, dass der erste Schläger 20.1 unter einem ersten Schlagwinkel α1 relativ zur Antriebsachse A bewegbar gelagert ist. Im Betrieb führt der Schlagbolzen 22 eine Bewegung aus, die unter dem Schlagwinkel α1 zur Antriebachse A verläuft. Wird der Antrieb betätigt, so oszilliert die Hülse 24. Bewegt sich die Hülse auf das Schlagwerkzeug 16 zu, wird der Schlagbolzen 22 so in die Hülse hinein gedrückt, dass der Luftdruck zwischen Hülse und Schlagbolzen so groß wird, dass der Schlagbolzen auf das Schlagwerkzeug zu beschleunigt wird und auf dieses aufschlägt. Bewegt sich die Hülse 24 zurück, so bewirkt der entstehende Unterdruck, dass der Schlagbolzen 22 vom Schlagwerkzeug 16 weg bewegt wird.

Der zweite Schläger 20.2 ist unter einem zweiten Schlagwinkel α2 relativ zur Antriebsachse A bewegbar gelagert, wobei im vorliegenden Fall α1 = α2 gilt.

Figur 2 zeigt einen Querschnitt entlang der Linie A-A durch den Taumelring 28. Es ist zu erkennen, dass der Taumelring 28 einen rotierbaren Kranz 36 besitzt, der an der Antriebswelle 30 angelenkt ist, im vorliegenden Fall mittels eines Gelenkbolzens 38 und einem Mitnehmer 40. Der Taumelring 28 besitzt zudem einen drehfesten Kranz 42, an dem die Schläger 20 angelenkt sind.

Figur 1 lässt erkennen, dass beim Drehen der Antriebswelle 30 die Hülsen 24 eine Hubbewegung mit einem Hub h ausführen. Der Hub h hängt von einem Taumelwinkel τ ab, der zu einer Senkrechten auf die Antriebsachse A gemessen wird. Gilt für den Taumelwinkel τ = 0°, so gilt h= 0 mm. Wächst der Taumelwinkel τ, der definitionsgemäß größer als 0 ist, so nimmt der Hub h zu.

Der Antrieb 32 umfasst eine Taumelwinkel-Verstellvorrichtung 44. Im vorliegenden Fall besitzt diese eine Verstellstange 46, die entlang der Antriebsachse A verläuft und mit der Antriebswelle 30 mit rotiert. Über ein Drehlager 48 steht die Verstellstange 46 in Verbindung mit einem Stellantrieb 48, der einen Stellmotor 50 aufweisen kann. Alternativ kann der Stellantrieb 48 auch per Hand betätigt werden. Durch Betätigen des Stellantriebs 48 kann die Verstellstange 46 entlang der Antriebsachse A verschoben werden, sodass sich der Taumelwinkel τ ändert.

Die Detailzeichnung unten links in Figur 1 zeigt einen Schnitt entlang der Linie B-B durch das Schlagwerkzeug 16. Es ist zu erkennen, dass dieses im vorliegenden Fall einteilig ausgebildet ist, das heißt, dass alle Schläger 20.1, 20.2, 20.3 zu einer Bewegung einer Werkzeugspitze 52 führen.

Wie in Figur 1a gezeigt kann das Schlagwerkzeug 16 gemäß einer alternativen Ausführungsform einen ersten Schlaghammer 54.1, einen zweiten Schlaghammer 54.2 und einen dritten Schlaghammer 54.3 aufweisen. Die Schlaghämmer 54.i (i=1, 2,...) können so ausgebildet sein, dass sie gemeinsam das Schlagwerkzeug 16 bilden und könnten daher auch als Teil-Schlagwerkzeuge bezeichnet werden.

Die Schlaghämmer 54.i sind so angeordnet, dass sie von jeweils genau einem Schläger getroffen werden können. So wird beispielsweise der Schlaghammer 54.1 nur vom Schläger 20.1 getroffen. Die Spitzen der Schlaghämmer 54, also die Spitzen aller Schlaghämmer 54.1, 54.2, 54.3, bilden eine gemeinsame Werkzeugspitze 52 (vergleiche Figur 1). Die Werkzeugspitze 52 ist vorzugsweise konisch verrundet.

Figur 1 zeigt, dass das Schlagwerkzeug 16 bezüglich der Antriebsachse A axial verschieblich an einem Gehäuse 56 der Festhammervorrichtung befestigt ist. Im vorliegenden Fall greift dazu eine Verriegelung 57 in einen Schlitz in dem Schlagwerkzeug 16.

Figur 3 zeigt die Abhängigkeit der Schlagenergie E von einer Drehfrequenz f des Antriebs 32. Es ist zu erkennen, dass die Schlagenergie E streng monoton mit der Drehfrequenz f zunimmt. Diese Abhängigkeit gilt bei konstantem Taumelwinkel τ. Es ist möglich, die Schlagenergie E durch Verringern des Taumelwinkels τ zu reduzieren. Das ermöglicht es, stets mit der maximalen möglichen Drehfrequenz f von beispielsweise 4000 Umdrehungen pro Minute zu arbeiten und dennoch gegebenenfalls die Schlagenergie E zu reduzieren.

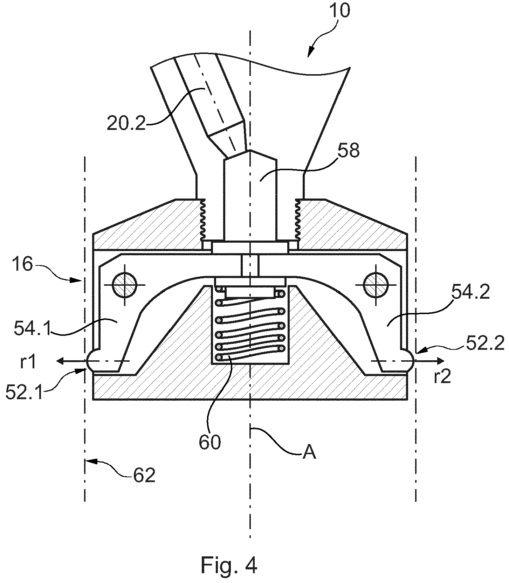

Figur 4 zeigt einen Teil einer erfindungsgemäßen Festhammervorrichtung gemäß einer zweiten Ausführungsform. Es ist zu erkennen, dass die Schläger 20, von denen lediglich der Schläger 20.2 eingezeichnet ist, auf einen Döpper 58 schlagen, der den Schlagimpuls auf eine Vielzahl von Schlaghämmern in Form von Schlagnocken 54.1, 54.2, ... weiterleitet. Der Döpper 58 ist entbehrlich, insbesondere wenn für jeden Schlaghammer 54.i genau ein Schläger 20.i vorhanden ist, der auf diesen Schlaghammer 54.i schlägt.

Die Schlaghämmer 54.i sind schwenkbar gelagert, sodass sie eine Wirkbewegung in eine Wirkbewegungsrichtung r i ausführen, die bezüglich der Antriebsachse A nach radial auswärts verläuft. Die Schlaghämmer 54 werden durch eine Feder 60 in ihre Ruhestellung, in der die jeweiligen Werkzeugspitzen 52 radial innen liegen, vorgespannt. Die Schlagimpulse werden dann nach radial außen, beispielsweise auf eine Rohinnenseite 62 eines Rohrs, das das zu bearbeitende Werkstück darstellt, übertragen.

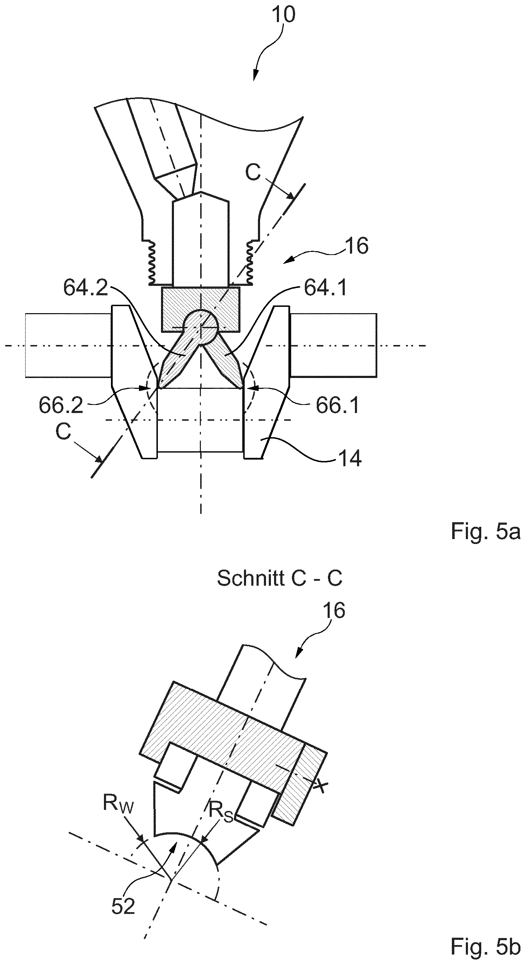

Figur 5a zeigt einen unteren Abschnitt einer erfindungsgemäßen Festhammervorrichtung 10 gemäß einer weiteren Ausführungsform, bei der das Schlagwerkzeug 16 zumindest einen schwenkbaren Stößel 64 aufweist. Der Stößel 64 ist so ausgebildet, dass eine Kehlung 66 in einem Werkstück 14 in Form einer Kurbelwelle bearbeitbar ist.

Es ist zu erkennen, dass das Schlagwerkzeug 16 einen schwenkbaren Stößel 64.1 oder - wie im vorliegenden Fall - zwei schwenkbare Stößel 64.1, 64.2 zum Bearbeiten von Kehlungen 66.1, 66.2 aufweisen kann. Die Kehlungen 66.1, 66.2 sind an Übergängen eines Kurbelzapfens zur jeweils benachbarten Kurbelwange oder Lagerzapfen und Kurbelwange ausgebildet. Ein erfindungsgemäßes Verfahren bezieht sich auf die Bearbeitung von Kehlungen in Kurbelwellen mittels einer erfindungsgemäßen Festhammervorrichtung 10.

Figur 5b zeigt eine alternative Ausführungsform für ein Schlagwerkzeug 16 einer erfindungsgemäßen Festhammervorrichtung, bei der die Werkzeugspitze 52 konkav ausgebildet ist. Ein Krümmungskreisradius Rₛ der Werkzeugspitze 52 ist beispielsweise gleich oder geringfügig größer als der halbe Radius Rw des Kurbelzapfens.

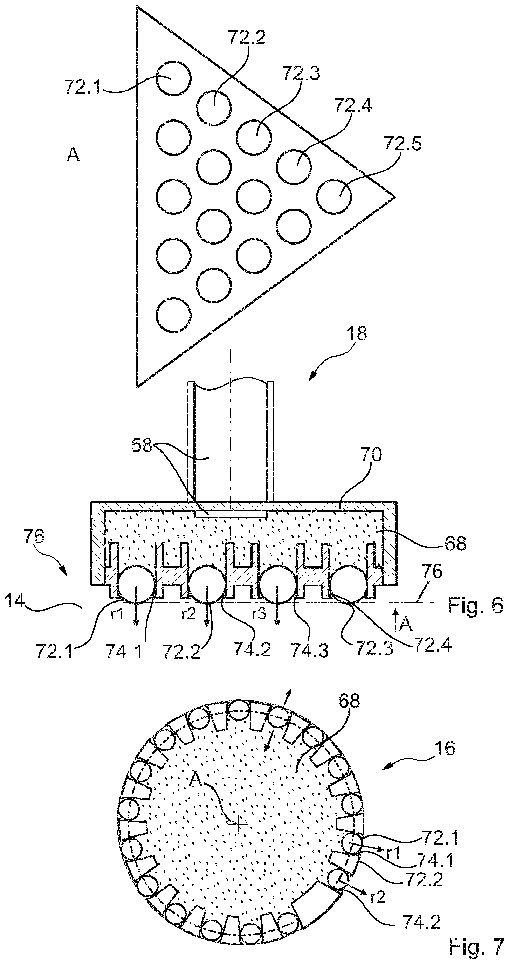

Figur 6 zeigt einen Querschnitt durch einen Teil eines Schlagwerks 18 einer erfindungsgemäßen Festhammervorrichtung. Bei dieser Ausführungsform leitet der Döpper 58 die Schlagimpulse der Schläger auf ein fließfähiges, inkompressibles Schlagimpuls-Übertragungsmittel in Form eines Öls mit einer Viskosität von 100 Pa·s bei 25°C. Es ist günstig, wenn die Viskosität von 100 Pa·s bei 25°C zumindest 80 Pa·s, insbesondere zumindest 200 Pa·s beträgt. Eine Viskosität von unter 10⁵ Pa·s ist vorteilhaft.

Das Schlagimpuls-Übertragungsmittel 68 ist in einem Gehäuse 70 angeordnet und steht in Kontakt mit einer Vielzahl an Schlagelementen 72.1, 72.2, .... Jedes Schlagelement 72 ist in einem Käfig 74 gefangen, der eine Bewegung in eine translatorische Richtung, im vorliegenden Fall in eine Bewegung von oben nach unten, zulässt. Die translatorischen Bewegungen in den jeweils anderen Richtungen werden hingegen unterbunden.

Die vom Döpper 58 übertragenen Schlagimpulse werden so auf die Schlagelemente 72 übertragen, die sich in eine radial auswärts gerichtete Wirkbewegungsrichtung r bewegen und so die Schlagimpulse auf eine Oberfläche 76 des Werkstücks übertragen. Die Schlagelemente 72 liegen in dieser Ausführungsform entlang einer Ebene, die der ebenen Oberfläche 76 entspricht. Im oberen Teilbild ist eine Ansicht von unten auf das Schlagwerkzeug 18 zu sehen.

Figur 7 zeigt einen schematischen Querschnitt durch ein weiteres Schlagwerkzeug 16, das eine Vielzahl an Schlagelementen 72.1, 72.2,... aufweist, die dann, wenn der Döpper, der in Figur 7 nicht zu sehen ist, einen Schlagimpuls auf das Schlagimpuls-Übertragungsmittel 68 überträgt, nach radial auswärts bezüglich der Achse A bewegt werden und so eine Rohrinnenseite eines Rohrs festhämmern können. Die Schlagelemente 72 liegen in dieser Ausführungsform entlang einer Zylinderinnenfläche, die der Innenoberfläche des zu bearbeitenden Werkstücks entspricht.

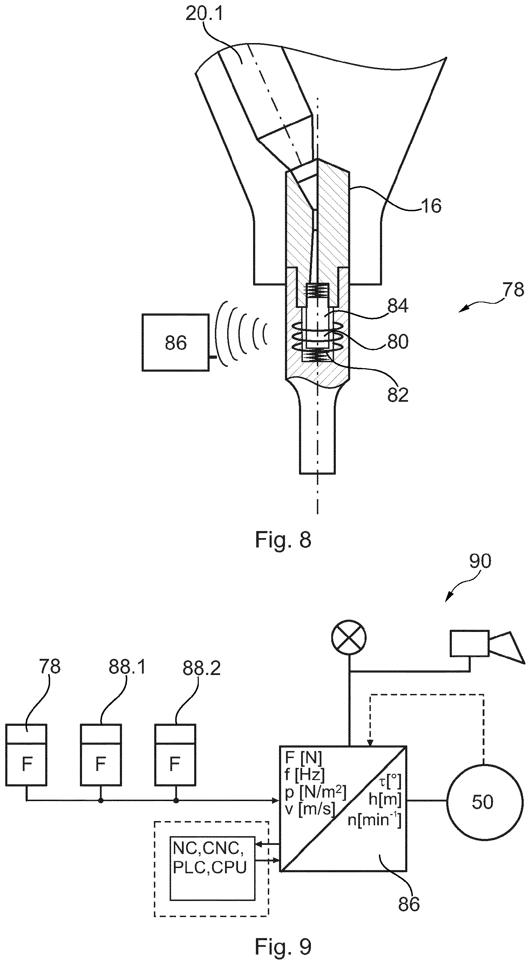

Figur 8 zeigt einen Teil einer erfindungsgemäßen Festhammervorrichtung 10, die einen Sensor 78 zum Messen der Schlagintensität von Schlägen der Schläger 20 aufweist. Der Sensor 78 umfasst eine Testmasse 80, die im vorliegenden Fall im Schlagwerkzeug 16 angeordnet ist. Alternativ kann der Sensor 78 beispielsweise auch im Döpper 58 (vergleiche Figur 4 und 6) angeordnet sein.

Schlägt der Schläger 20.1 auf das Schlagwerkzeug 16, so kommt es zu einer Relativbewegung zwischen der Testmasse 80 und dem übrigen Schlagwerkzeug. Durch die Bewegung der Masse 80 relativ zum übrigen Werkzeug wird in einer Spule 82 ein elektrischer Strom induziert, der proportional zur Geschwindigkeit der Testmasse relativ zum übrigen Teil des Schlagwerkzeugs 16 ist. Dieses Signal wird von einem Verstärker 84 verstärkt und, beispielsweise per Funk, an eine Steuerung 86 übermittelt.

Figur 9 zeigt schematisch, dass der Sensor 78, sowie gegebenenfalls weitere Sensoren 88.1, 88.2 mit der Steuerung 86 verbunden sind. Die Steuerung 86 vergleicht das eingehende Sensorsignal mit einem vorgegebenen Soll-Signal und steuert den Stellmotor 50 so an, dass die Schlagenergie E sich dem vorgegebenen Soll-Wert E_{Soll} annähert.

Optional ist die Steuerung 86 mit zumindest einer Signalvorrichtung 90 zum Ausgeben eines optischen und/oder akustischen Warnsignals verbunden, falls die Abweichung zwischen dem Ist-Wertᵢₛₜ der Schlagenergie von dem vorgegebenen Soll-Wert E_{Soll} einen vorgegebenen Wert überschreitet.

Zur bauteilbezogenen, ortsabhängigen, gesteuerten und veränderlichen Oberflächenmodellierung stellt die Steuerung 86 mit einer übergeordneten Steuerung - beispielsweise Maschinensteuerung, Programmiercode, Computer - einen Signalaustausch her, um jeden Impuls zu konditionieren. Hierüber werden ebenso Erkenntnisse über den Prozesszustand ermittelt. Erfindungsgemäß ist damit zudem eine Werkzeugmaschine oder ein Roboter, die bzw. der eine erfindungsgemäße Festhammervorrichtung aufweist und eingerichtet ist zum Bewegen der Festhammervorrichtung entlang eines vorgegebenen Pfads auf dem Werkstück.

Ferner kann die Steuerung 86 mit einer Speichereinheit zur Aufzeichnung der zu jedem Ort der Bearbeitungsfläche zugeordneten Schlagenergie ausgerüstet sein. Damit ist eine Rückverfolgung der Bearbeitung im Sinne der Qualitätssicherung möglich. In anderen Worten umfasst eine erfindungsgemäße Werkzeugmaschine vorzugsweise eine Maschinensteuerung, in der eine Trajektorie gespeichert ist, die die Festhammervorrichtung bei der Bearbeitung des Werkstücks abfährt. In der Maschinensteuerung oder der Steuerung der Festhammervorrichtung ist gemäß einer bevorzugten Ausführungsform zu zumindest einigen Punkten der Trajektorie eine Schlagenergie gespeichert und die Festhammervorrichtung ist ausgebildet zum Festhammern des Werkstücks mit der vorgegebenen Schlagenergie.

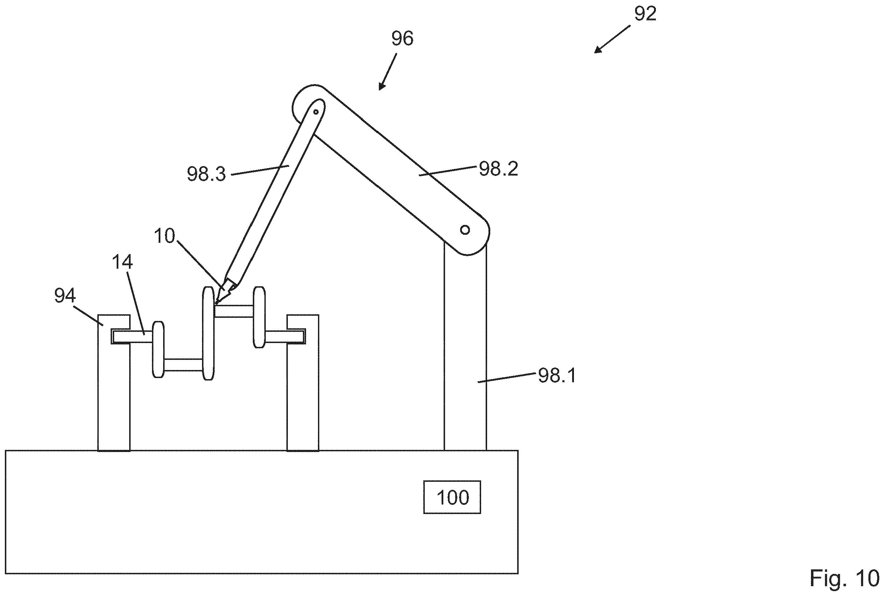

Figur 10 zeigt eine erfindungsgemäße Festhammermaschine 92, die eine Werkstückaufnahme 94 zum Aufnehmen des Werkstücks 14, eine erfindungsgemäße Festhammervorrichtung 10 und eine Positioniervorrichtung 96 zum geführten Positionieren der Festhammervorrichtung 10 relativ zum Werkstück 14 aufweist. Die Positioniervorrichtung 96 besitzt mehrere schematisch eingezeichnete Maschinenachsen 98.1, 98.2, 98.3, die - wie im in Figur 10 gezeigten Fall - Drehachsen sein können, das ist aber nicht notwendig, Alternativ oder zusätzlich kann zumindest eine der Maschinenachsen eine translatorische Achse sein.

Die Festhammermaschine 92 kann als Roboter ausgebildet sein. Sie besitzt eine Maschinensteuerung 100, die Antriebe der Maschinenachsen so ansteuert, dass die Festhammervorrichtung 10 entlang einer vorgegebenen Trajektorie bewegt wird. Die vorgegebene Trajektorie ist beispielsweise in einem digitalen Speicher der Maschinensteuerung 100 abgelegt. Zudem kann die Werkstückaufnahme 94 einen Antrieb aufweisen, mittels dem das Werkstück 14 gedreht werden kann. Mittels der Festhammermaschine 92 kann so das Werkstück an vorgegebenen Regionen festgehammert werden, sodass der Eigenspannungszustand des Werkstücks 14 verändert wird.

**Bezugszeichenliste**

| | | | |
|---|---|---|---|
| 10 | Festhammervorrichtung | 66 | Kehlung |
| 12 | Randzone | 68 | Schlagimpuls-Übertragungsmittel |
| 14 | Werkstück | 70 | Gehäuse |
| 16 | Schlagwerkzeug | 72 | Schlagelement |
| 18 | Schlagwerk | | |
| | | 74 | Käfig |
| 20 | Schläger | 76 | Oberfläche |
| 22 | Schlagbolzen | 78 | Sensor |
| 24 | Hülse | 80 | Testmasse |
| 26 | Schlagende | 82 | Spule |
| 28 | Taumelring | | |
| | | 84 | Verstärker |
| 30 | Antriebswelle | 86 | Steuerung |
| 32 | Antrieb | 88 | Sensor |
| 34 | Motor | 90 | Signalvorrichtung |
| 36 | rotierbarer Kranz | | |
| 38 | Gelenkbolzen | 92 | Festhammermaschine |
| | | 94 | Werkzeugaufnahme |
| 40 | Mitnehmer | 96 | Positioniervorrichtung |
| 42 | drehfester Kranz | 98 | Maschinenachse |
| 44 | Taumelwinkel-Verstellvorrichtung | 100 | Maschinensteuerung |
| 46 | Verstellstange | | |
| 48 | Stellantrieb | A | Antriebsachse |
| | | h | Hub |
| 50 | Stellmotor | τ | Taumelwinkel |
| 52 | Werkzeugspitze | E | Schlagenergie |
| 54 | Schlaghammer | f | Drehfrequenz |
| 56 | Gehäuse | | |
| 57 | Verriegelung | W | Wirksequenz |
| | | R_{S} | Krümmungskreisradius |
| 58 | Döpper | α | Schlagwinkel |
| 60 | Feder | r | Wirkbewegungsrichtung |
| 62 | Rohrinnenseite | | |
| 64 | Stößel | | |

## Patentansprüche

1. Festhammervorrichtung (10) zur Randzonenbeeinflussung von Werkstücken (14), mit
(a) einem Schlagwerkzeug (16) zum Einwirken auf das Werkstück (14),
(b) einem Schlagwerk (18), das
einen Schläger (20) zum Erzeugen eines Schlagimpulses auf das Schlagwerkzeug (16) aufweist, und
(c) einem Antrieb (32) zum Antreiben des Schlagwerks (18),
(d) wobei das Schlagwerk (18) zumindest einen zweiten Schläger (20) zum Erzeugen eines Schlagimpulses auf das Schlagwerkzeug (16) aufweist,
**dadurch gekennzeichnet, dass**
(e) das Schlagwerk (18)
- eine Antriebswelle (30), die sich entlang einer Antriebsachse (A) erstreckt, und
- einen Taumelring (28) zum Umsetzen einer Drehbewegung der Antriebswelle (30) in eine Translationsbewegung
aufweist und
(f) der erste Schläger (20.1) und der zweite Schläger (20.2) von dem Taumelring (28) angetrieben sind.

2. Festhammervorrichtung (10) nach Anspruch 1, **dadurch gekennzeichnet, dass**
- der erste Schläger (20.1) unter einem ersten spitzen Schlagwinkel (α1) relativ zur Antriebsachse bewegbar gelagert ist und
- der zweite Schläger unter einem zweiten spitzen Schlagwinkel (α2) relativ zur Antriebsachse (A) bewegbar gelagert ist.

3. Festhammervorrichtung (10) nach einem der vorstehenden Ansprüche 1 oder 2, **dadurch gekennzeichnet, dass**
- der Taumelring (28) unter einem Taumelwinkel (τ) relativ zu der Antriebswelle (30) ausgerichtet ist und dass
- der Antrieb (32) eine Taumelwinkel-Verstellvorrichtung (44) zum Einstellen des Taumelwinkels (τ) umfasst.

4. Festhammervorrichtung (10) nach Anspruch 3, **gekennzeichnet durch**
- zumindest einen Sensor (88) zum Messen einer Schlagintensität von Schlägen der Schläger (20) und
- eine Steuerung (86), die mit dem Sensor (88) und der Taumelwinkel-Verstellvorrichtung (44) zum Einstellen des Taumelwinkels (τ) verbunden und zum Steuern und/oder Regeln der Schlagenergie (E) eingerichtet ist.

5. Festhammervorrichtung (10) nach einem der vorstehenden Ansprüche, **dadurch gekennzeichnet, dass**
(a) das Schlagwerk (18) einen Döpper (58) aufweist und
(b) das Schlagwerkzeug (16)
- ein erstes Schlagelement (72.1),
- zumindest ein zweites Schlagelement (72.2),
- für jedes Schlagelement (72) einen Käfig (74), in dem das Schlagelement (72) in einer Richtung beweglich gefangen ist, und
- ein fließfähiges inkompressibles Schlagimpuls-Übertragungsmittel (68), das angeordnet ist zum Übertragen des Schlagimpulses vom Döpper (58) auf die Schlagelemente (72),
umfasst.

6. Festhammervorrichtung (10) nach einem der vorstehenden Ansprüche, **dadurch gekennzeichnet, dass**
- das erste Schlagelement (72.1) zum Ausführen einer Wirkbewegung in eine erste Wirkbewegungsrichtung (r1) angeordnet ist und
- das zweite Schlagelement (72.2) zum Ausführen einer Wirkbewegung in eine zweite Wirkbewegungsrichtung (r2) angeordnet ist, die von der ersten Wirkbewegungsrichtung (r1) verschieden ist.

7. Festhammervorrichtung (10) nach einem der vorstehenden Ansprüche, **dadurch gekennzeichnet, dass** das Schlagwerkzeug (16) einen schwenkbaren Stößel (64) aufweist.

8. Festhammervorrichtung (10) nach einem der vorstehenden Ansprüche, **dadurch gekennzeichnet, dass**
- das Schlagwerk (18) einen ersten Schlaghammer (54.1) und zumindest einen zweiten Schlaghammer (54.2) umfasst, die relativ zueinander bewegbar sind,
- wobei vorzugsweise der erste Schlaghammer (54.1) schwenkbar gelagert ist, sodass der erste Schlaghammer (54.1) beim Betrieb der Festhammervorrichtung (10) eine Wirkbewegung in eine erste Wirkbewegungsrichtung (r1) ausführt, und
- vorzugsweise der zweite Schlaghammer (54.2) schwenkbar gelagert ist, sodass der zweite Schlaghammer (54.2) beim Betrieb der Festhammervorrichtung (10) eine Wirkbewegung in eine zweite Wirkbewegungsrichtung (r2) ausführt, die sich von der ersten Wirkbewegungsrichtung (r1) unterscheidet.

9. Festhammermaschine mit
- einer Werkstückaufnahme (94) zum Aufnehmen des Werkstücks (14),
- einer Festhammervorrichtung (10) nach einem der vorstehenden Ansprüche und
- einer Positioniervorrichtung (96) zum geführten Positionieren der Festhammervorrichtung (10) relativ zum Werkstück (14).

10. Verfahren zum Festhammern eines Werkstücks (14), bei dem eine Festhammervorrichtung (10) nach einem der vorstehenden Ansprüche verwendet wird.

## Claims

1. Hammering device (10) for influencing subsurfaces of workpieces (14) with
(a) a beating tool (16) for acting on the workpiece (14),
(b) a beating mechanism (18) that comprises
a beater (20) for generating a beating pulse on the beating tool (16) and
(c) a drive (32) for driving the beating mechanism (18),
(d) wherein the beating mechanism (18) has at least a second beater (20) for generating a beating pulse on the beating tool (16),
**characterised by** the fact that
(e) the beating mechanism (18) comprises
- a drive shaft (30) that extends along a drive axis (A), and
- a wobble ring (28) for transforming a rotational movement of the drive shaft (30) into a translational movement,
and
(f) the first beater (20.1) and the second beater (20.2) are driven by the wobble ring (28).

2. Hammering device (10) according to claim 1, **characterised by** the fact that
- the first beater (20.1) is mounted, such that it is moveable, at a first striking angle (α1) relative to the drive axis and
- the second beater is mounted, such that it is moveable, at a second striking angle (α2) relative to the drive axis (A).

3. Hammering device (10) according to one of the above claims 1 or 2, **characterised by** the fact that
- the wobble ring (28) is mounted at a wobble angle (τ) relative to the drive shaft (30) and that
- the drive (32) comprises a wobble angle adjustment device (44) for adjusting the wobble angle (τ).

4. Hammering device (10) according to claim 3, **characterised by**
- at least one sensor (88) for measuring an impact intensity of beats of the beaters (20) and
- a control system (86) that is connected to the sensor (88) and the wobble angle adjustment device (44) for adjusting the wobble angle (τ) and that is configured to control and/or regulate the impact energy (E).

5. Hammering device (10) according to one of the above claims, **characterised by** the fact that
(a) the beating mechanism (18) comprises a snap die (58), and
(b) the beating tool (16) comprises
- a first beating element (72.1),
- at least a second beating element (72.2),
- a cage (74) for each beating element (72) in which the beating element (72) is trapped such that it is moveable in one direction, and
- a flowable, incompressible beating pulse transmission agent (68) that is arranged to transmit the beating pulse from the snap die (58) to the beating element (72).

6. Hammering device (10) according to one of the above claims, **characterised by** the fact that
- the first beating element (72.1) is arranged to conduct an effective movement in a first effective movement direction (r1) and
- the second beating element (72.2) is arranged to conduct an effective movement in a second effective movement direction (r2) that is different to the first effective movement direction (r1).

7. Hammering device (10) according to one of the above claims, **characterised by** the fact that the beating tool (16) comprises a pivoted plunger (64).

8. Hammering device (10) according to one of the above claims, **characterised by** the fact that
- the beating mechanism (18) has a first hammer (54.1) and at least a second hammer (54.2) that can be moved relative to one another,
- wherein the first hammer (54.1) is preferably stored such that it is pivoted, so that the first hammer (54.1) conducts an effective movement in a first effective movement direction (r1) during operation of the hammering device (10), and
- the second hammer (54.2) is preferably stored such that it is pivoted, so that the second hammer (54.2) conducts an effective movement in a second effective movement direction (r2), which is different to the first effective movement direction (r1), during operation of the hammering device (10).

9. Hammering machine with
- a workpiece accommodation (94) for receiving the workpiece (14),
- a hammering device (10) according to one of the above claims and
- a positioning device (96) for the guided positioning of the hammering device (10) relative to the workpiece (14).

10. Method for hammering a workpiece (14), wherein a hammering device (10) according to one of the above claims is used.

## Revendications

1. Système de martelage (10) pour influencer le superficie de pièces à oeuvrer (14), comportant
(a) un outil de percussion (16) pour agir sur la pièce à oeuvrer (14),
(b) un mécanisme de percussion (18) qui
comprend un percuteur (20) pour générer une impulsion de percussion sur l'outil de percussion (16), et
(c) un entraînement (32) pour entraîner le mécanisme de percussion (18),
(d) le mécanisme de percussion (18) comprenant au moins un second percuteur (20) pour générer une impulsion de percussion sur l'outil de percussion (16),
**caractérisé en ce que**
(e) le mécanisme de percussion (18) comprend
- un arbre d'entraînement (30) qui s'étend le long d'un axe d'entraînement (A), et
- un anneau oscillant (28) pour convertir un mouvement de rotation de l'arbre d'entraînement (30) en un mouvement de translation,
(f) le premier percuteur (20.1) et le second percuteur (20.2) sont entraînés par l'anneau oscillant (28).

2. Système de martelage (10) selon la revendication 1,
**caractérisé en ce que**
- le premier percuteur (20.1) est monté mobile par rapport à l'axe d'entraînement sous un premier angle aigu de percussion (α1), et
- le second percuteur est monté mobile par rapport à l'axe d'entraînement (A) sous un second angle aigu de percussion (α2).

3. Système de martelage (10) selon l'une des revendications précédentes 1 ou 2,
**caractérisé en ce que**
- l'anneau oscillant (28) est orienté sous un angle d'oscillation (τ) par rapport à l'arbre d'entraînement (30), et **en ce que**
- l'entraînement (32) comprend un dispositif de réglage d'angle d'oscillation (44) pour régler l'angle d'oscillation (τ).

4. Système de martelage (10) selon la revendication 3,
**caractérisé par**
- au moins un capteur (88) pour mesurer une intensité de percussion de frappes des percuteurs (20), et
- une commande (86) qui est connectée au capteur (88) et au dispositif de réglage d'angle d'oscillation (44) pour régler l'angle d'oscillation (τ) et pour commander et/ou réguler l'énergie de percussion (E).

5. Système de martelage (10) selon l'une des revendications précédentes,
**caractérisé en ce que**
(a) le mécanisme de percussion (18) comprend une bouterolle (58), et
(b) l'outil de percussion (16) comprend
- un premier élément de percussion (72.1),
- au moins un second élément de percussion (72.2),
- pour chaque élément de percussion (72) une cage (74) dans laquelle l'élément de percussion (72) est capté en étant mobile dans une direction, et
- un agent de transmission d'impulsion de percussion (68) capable de s'écouler et incompressible, qui est agencé pour transmettre l'impulsion de percussion depuis la bouterolle (58) aux éléments de percussion (72).

6. Système de martelage (10) selon l'une des revendications précédentes,
**caractérisé en ce que**
- le premier élément de percussion (72.1) est agencé pour exécuter un mouvement d'action dans une première direction de mouvement d'action (r1), et
- le second élément de percussion (72.2) est agencé pour exécuter un mouvement d'action dans une seconde direction de mouvement d'action (r2) qui est différente de la première direction de mouvement d'action (r1).

7. Système de martelage (10) selon l'une des revendications précédentes,
**caractérisé en ce que**
l'outil de percussion (16) comprend un poinçon basculant (64).

8. Système de martelage (10) selon l'une des revendications précédentes,
**caractérisé en ce que**
- l'outil de percussion (18) comprend un premier marteau de percussion (54.1) et au moins un second marteau de percussion (54.2) qui sont mobiles l'un par rapport à l'autre,
- le premier marteau de percussion (54.1) est monté de préférence de façon mobile en basculement, de sorte que le premier marteau de percussion (54.1) exécute un mouvement d'action dans une première direction de mouvement d'action (r1) pendant le fonctionnement du système de martelage fixe (10), et
- le second marteau de percussion (54.2) est monté de préférence de façon mobile en basculement, de sorte que le second marteau de percussion (54.2) exécute un mouvement d'action dans une seconde direction de mouvement d'action (r2) différente de la première direction de mouvement d'action (r1), pendant le fonctionnement du système de martelage fixe (10).

9. Machine de martelage, comportant
- un logement de pièce à oeuvrer (94) pour recevoir la pièce à oeuvrer (14),
- un système de martelage fixe (10) selon l'une des revendications précédentes, et
- un dispositif de positionnement (96) pour le positionnement guidé du système de martelage fixe (10) par rapport à la pièce à oeuvrer (14).

10. Procédé de martelage d'une pièce à oeuvrer (14) dans lequel on utilise un système de martelage fixe (10) selon l'une des revendications précédentes.
